Europäisches Patentamt

European Patent Office

Office européen des brevets

(19)

(11) Numéro de publication: **0 069 137**
**B1**

(12) **FASCICULE DE BREVET EUROPEEN**

(45) Date de publication du fascicule du brevet:
23.10.85

(51) Int. Cl.⁴: **C 12 G 3/08**

(21) Numéro de dépôt: **82900250.0**

(22) Date de dépôt: **13.01.82**

(86) Numéro de dépôt international:
**PCT/FR 82/00005**

(87) Numéro de publication internationale:
**WO 82/02405 (22.07.82** Gazette **82/18)**

(54) **PROCEDE DE PREPARATION DE BOISSONS NATURELLES A FAIBLE TENEUR ALCOOLIQUE, BOISSONS ET PRODUITS DIVERS OBTENUS PAR MISE EN OEUVRE DE CE PROCEDE.**

(30) Priorité: **13.01.81 FR 8100915**

(43) Date de publication de la demande:
**12.01.83 Bulletin 83/2**

(45) Mention de la délivrance du brevet:
**23.10.85 Bulletin 85/43**

(84) Etats contractants désignés:
**AT BE CH DE FR GB LI LU NL SE**

(56) Documents cités:
**BE - A - 787 847**
**BE - A - 883 829**
**DE - A - 2 145 298**
**DE - A - 2 323 094**
**DE - A - 2 339 206**
**DE - A - 2 413 236**

(73) Titulaire: **BONNEAU; Marc, 42, rue Bélissen,**
**F-69005 Lyon (FR)**

(72) Inventeur: **BONNEAU; Marc, 42, rue Bélissen,**
**F-69005 Lyon (FR)**

(74) Mandataire: Maureau, Pierre, Cabinet **GERMAIN &**
**MAUREAU Le Britannia - Tour C 20, Boulevard E.**
**Déruelle, F-69003 Lyon (FR)**

**0 069 137**

## Description

L'invention concerne un procédé de préparation de boissons naturelles à faible teneur alcoolique, et les boissons et produits divers obtenus par mise en oeuvre de ce procédé.

Les diverses boissons alcoolisées actuellement présentes dans le commerce telles que vins, bières, cidres, poirés, apéritifs, liqueurs ... sont généralement obtenues par fermentation alcoolique de différents sucres végétaux contenus dans des fruits et des baies diverses (raisins, pommes, poires, prunes, etc....).

La teneur alcoolique élevée de ces boissons, autrefois recherchée, constitue à l'heure actuelle, un handicap sinon un défaut puisque l'ingestion fréquente et abusive de ces boissons a des conséquences graves et nocives pour la santé humaine et pour l'hygiène publique.

La nécessité de préparer et de commercialiser des baissons non alcoolisées apparaît comme une obligation pour la santé et la société. A l'heure actuelle, des essais de fabrication de boissons à faible teneur alcoolique ont été rapportés dans la presse. Ces fabrications, dans le cas du vin et de la bière, font généralement appel à un processus de fermentation alcoolique modifié, dans le sens d'une diminution qualitative et quantitative, grâce à l'utilisation de moûts et de levures adaptées.

On a également effectué, au stade du laboratoire, des essais de désalcoolisation par chromatographie, mais l'extrapolation technique à l'échelle industrielle reste trop onéreuse et surtout en désaccord avec les règlements actuels de vinification.

Il convient également de rappeler que la distillation constitue un procédé classique d'extraction de l'alcool contenu dans des boissons fermentées telles que le vin. Cette technique consommatrice d'énergie est onéreuse et, si elle conduit à la production d'alcools de qualité, elle ne donne comme sous-produits que des vinasses, résidus des distillation, aux qualités physico-chimiques et organoleptiques dénaturées et modifiées par rapport à la boisson d'origine.

L'obtention de boissons faiblement alcoolisées par passage sur membranes semi-perméables a également été mentionnée dans différents brevets. Certains auteurs utilisent le seul procédé d'osmose inverse pour séparer une boisson en un concentrat et en un filtrat (brevets belge n° 717 847, allemand 2 323 094, allemand 2 339 206) dont les constitutions moléculaires respectives, et donc les propriétés physicochimiques et organoleptiques, sont étroitement fonction du seuil de coupure de la membrane utilisée. Le concentrat, généralement retenu comme boisson désalcoolisée, est appauvri, et même selon les cas, totalement dépourvu des molécules de petits poids moléculaires tels que les sels, les esters, les aldéhydes rejetés avec l'alcool dans le filtrat. Par ailleurs, les fortes pressions exercées lors de l'osmose inverse dénaturent un certain nombre de molécules et de liaisons intermoléculaires, ce qui se traduit par une altération des propriétés physicochimiques (turbi dité accrue, floculation, etc....) et organoleptiques (saveur et flaveurs modifiées) du produit final. Les mêmes constatations s'appliquent aux procédés de désalcoolisation utilisant un autre phénomène physique tel que la seule technique d'ultrafiltration sur membrane semi-perméable: (brevets allemands 2 145 298 et 2 413 236).

La nature du rétentat et du filtrat obtenus est essentiellement liée au seuil de coupure de la membrane utilisée et la désalcoolisation en un temps fournit généralement un rétentat de grosses molécules, dépourvu des esters, des aldéhydes et des sels nécessaires à la bonne saveur de la boisson finale.

Le procédé de dialyse qui utilise encore un autre phénomène physique (brevet belge 883 829) faisant appel à l'entraînement de l'alcool au travers d'une membrane de dialyse par une solution de contrélution présente les mêmes inconvénients que précédemment pour le produit final désalcoolisé.

L'invention s'est donnée pour but principal de permettre la préparation et la fabrication, à partir de liquides naturels déjà alcoolisés et dont le cycle de fermentation est achevé, de boissons reconstituées à faible teneur alcoolique (inférieure à 5° Gay Lussac) qui conservent des propriétés organoleptiques, physico-chimiques et biologiques très proches de celles des liquides d'origine.

C'est ainsi qu'elle a pour objet un procédé de préparation de boissons naturelles à faible teneur alcoolique dont l'originalité consiste à soumettre un liquide alcoolisé naturel à plusieurs étapes de fractionnements physiques non dénaturants comprenant successivement des filtrations moléculaires sur membrane semi-perméable (ultrafiltration et osmose inverse) associées à une distillation sous vide à basse température. Les différentes fractions ainsi obtenues à chaque étape du traitement sont ensuite réassociées de manière adéquate afin de fournir un liquide final débarassé en tout ou en partie du seul alcool de départ.

Ces étapes de fractionnement physique par filtrations moléculaires sont avantageusement choisies parmi les étapes, successivement associées, d'ultrafiltration moléculaire du liquide alcoolisé sous faible pression au travers d'un ultrafiltre semi-perméable dont le seuil de coupure se situe entre 30 000 et 1000 et de préférence aux environs de 10 000, et d'osmose inverse de l'ultrafiltrat sous pression au travers de membranes synthétiques semiperméables dont le seuil de coupure se situe entre 500 et 100 et de préférence aux environs de 250. L'osmosat est ensuite soumis à une distillation sous vide à basse température qui élimine l'alcool et qui fournit un rétentat aqueum salé et aromatique.

Il est ainsi possible, grâce à ces étapes successives de fractionnements physiques non dénaturants, de séparer les éléments constitutifs d'un liquide alcoolisé selon leur taille et leur poids moléculaire et

2

leur point d'ébullition-évaporation et donc d'extraire, de séparer et d'éliminer une partie importante des alcools de faible poids moléculaire (méthanol, éthanol) contenus dans un liquide fractionné tout en conservant les autres éléments de poids moléculaires supérieurs et identiques, supports des propriétés organoleptiques, biologiques et physicochimiques de la boisson. Les différents rétentats obtenus après ultrafiltration, osmose inverse et évaporation sont mélangés en proportions adéquates pour fournir une boisson reconstituée finale à faible teneur alcoolique.

L'originalité du mode de réalisation de l'invention réside dans le choix et l'agencement chronologique de techniques successives, déja connues en soi, selon un schéma judicieux qui permet l'élimination du seul alcool tout en maintenant l'intégrité qualitative et quantitative du mélange des diverses molécules contenues dans la boisson de départ.

Selon un autre mode de réalisation, les produits issus des filtrations moléculaires successives peuvent être soumis à une étape de dessication sous vide par sublimation après congélation des rétentats obtenus.

Les liquides alcoolisés naturels de départ sont avantageusement choisis parmi les vins, les bières, les poirés, les cidres, les apéritifs, les liqueurs et les liquides issus de la fermentation alcoolique des glucides végétaux.

L'invention a également pour objet les divers produits résultant de la mise en oeuvre du procédé selon l'invention et notamment les boissons désalcoolisées ainsi obtenues qui présentent des propriétés physico-chimiques, biologiques et organoleptiques tout-à-fait comparables à celles des liquides alcoolisés dont elles proviennent, les autres produits issus des différentes étapes du procédé objet de l'invention, et notamment les alcools provenant des filtrats et des évaporats; elle concerne également les mélanges de ces mêmes produits, notamment aux fins de fabrication de diverses boissons désalcoolisées.

L'ultrafiltration sur membranes semi-perméables est une technique industrielle qui permet la séparation sous une certaine pression, comprise entre $10^5$ Pa et $8 \cdot 10^5$ Pa, de deux ou plusieurs espèces moléculaires différentes, fonction de leur poids moléculaire à température ambiante par exemple entre 10 et 30°C, sans changement de phase. L'ultrafiltration consiste à forcer certains éléments moléculaires de petites tailles à passer, par application d'une certaine surpression au travers d'une membrane synthétique semi-perméable, ou ultrafiltre possèdant une microstructure et une porosité suffisamment fine pour laisser passer des petites molécules (filtrat) et pour retenir les grosses molécules (rétentat).

Les ultrafiltres sont caractérisés par leur seuil de coupure qui correspond à la masse moléculaire au-delà de laquelle les espèces moléculaires sont totalement retenues.

L'osmose est un phénomène physique qui se manifeste par le passage d'un solvant (eau, alcool ...)au travers d'une membrane semi-perméable naturelle ou synthétique (polyamide, polysulfones, etc.) qui retient le flux d'un soluté (sels minéraux dissous, molécules organiques etc. ...). L'osmose directe se manifeste par un passage d'eau, au travers d'une membrane semi-perméable, d'une solution saline peu concentrée vers une solution saline plus concentrée, jusqu'à une phase d'équilibre osmotique. L'osmose inverse, comme son nom l'indique, apparaît lorsqu'on applique une pression, supérieure à la pression osmotique, sur une solution saline concentrée. Un flux de solvant (eau, alcool) s'établit alors au travers d'une membrane semi-perméable, de la solution concentrée vers la solution diluée, tandis que la membrane retient les ions minéraux, les molécules organiques, et. ... L'osmose inverse constitue depuis quelques années, une technique industrielle grâce à l'existence de différents osmoseurs préparatifs à fibres creuses en polyamide aromatique ou modules d'ultrafiltration plans on tubulaires, etc.).

La distillation sous vide à faible température est largement utilisée en distillerie industrielle. Elle s'avère moins dénaturante que la distillation sous pression atmosphérique normale et consomme moins d'énergie. Dans le cas du procédé objet de l'invention, elle est appliquée à un mélange liquide de très petites molécules (eau, sels, esters, alcool, etc. ...) et nécessite moins d'énergie spécifique que dans le traitement d'un mélange complexe de grosses, moyennes et petites molécules. Dans ces conditions elle s'avère également efficace dans l'évaporation sélective de l'alcool et peu dénaturante pour les autres petites molécules de la solution.

La mise en oeuvre des étapes du procédé de fractionnements physiques objet de l'invention sera mieux comprise d'ailleurs et les avantages de ladite invention ressortiront bien des exemples suivants qui l'illustrent sans toutefois la limiter.

Exemple 1

1-1) 1000 litres de vin rouge (Bordeaux, Côtes de Castillon) titrant 12° Gay Lussac sont soumis en un premier temps à plusieurs passages dans une batterie de modules d'ultrafiltration moléculaire sur membranes synthétiques semi-perméables de porosités décroissantes telles que celles commercialisées sous la dénomination Millipore MU 15 dont le seuil de coupure se situe aux environs de 10 000. Ces membranes sont inertes à toutes les gammes de pH et inattaquables par les acides organiques.

3

Après passage sur cette batterie de modules d'ultrafiltration on recueille:
- d'une part 950 litres d'un filtrat $F_1$ à 12° GL rassemblant tous les éléments dont le poids moléculaire est inférieur à 10 000 daltons tels que les sucres, peptides, esters, alcools, vitamines, eau, sels minéraux ...
- d'autre part 50 litres d'un rétentat $R_1$ à 12° GL rassemblant les éléments dont le poids moléculaire est supérieur à 10 000, tels que les flavones, les pigments anthocyaniques, et les leuccanthocyanes et les sels d'acides organiques tels que les tartrates ...

1-2) On fait ensuite passer les 950 litres du filtrat $F_1$ au travers d'un osmoseur à fibres creuses en polyamide aromatique du type commercialisé par la firme Dégremont et dont le seuil de coupure se situe aux environs de 250; ce matériau est inerte vis-à-vis de la plupart des produits chimiques, même à des pH acides de l'ordre de 4. Les fibres sont dispersées dans un module qui reçoit le filtrat $F_1$ (fraction organique complexe issue mais différente du vin de départ, PM $\leq$ 10 000) sous une pression de l'ordre de $8 \cdot 10^5$ à $12 \cdot 10^5$ Pa, par l'intermédiaire d'un tube poreux distributeur de flux situé dans l'axe du module. Le filtrat $F_1$ chemine de façon radiale dans le module autour des fibres creuses. Sous l'effet de la pression exercée, l'eau et les molécules de poids moléculaire inférieur à 250 (méthanol, éthanol, acide acétique, sels minéraux) traversent la membrane de fibres creuses et s'écoulent à l'intérieur des canaux fibrillaires puis sont rejetées à la périphérie du module sous forme de 850 l d'un filtrat $F_2$ à 12° GL (fraction organique complexe issue, mais différente, du filtrat $F_1$, PM $\leq$ 250).

On recueille d'autre part 100 l d'un rétentat $R_2$ à 12° GL enrichi en sels, sucres, polyalcools, aldéhydes, esters, vitamines, libres ou adsorbées sur des macromolécules, de poids moléculaire compris entre 10 000 et 250 et contenant également la quantité de petites molécules de poids moléculaire inférieure à 250 proportionnelle â ces 100 litres.

1-3) On soumet alors les 850 litres de $F_2$ (ou osmosat) à évaporation dans une colonne de distallition sous vide (0,015 atm.-) à faible température (45°C) pendant plusieurs heures. L'alcool éthylique ainsi évaporé en majeure partie est refroidi et collecté à part.

Le rétentat liquide $R_3$ restant dans la colonne après évaporation est principalement constitué d'un mélange d'eau, d'acides simples, d'ions et d'aldéhydes.

Le rétentat $R_3$ est utilisé comme diluant du mélange des rétentats $R_1$ et $R_2$ dans des porportions adéquates.

Le mélange des rétentats $R_1$ et $R_2$, enrichis notamment en macromolécules responsables des qualités organoleptiques telles que les flavones, les anthocyanes, les catéchines, les lencoanthocyanes, les polyalcools, sur lesquelles sont adsorbés ou complexés les sels d'acides organiques tels que les tartrates de potassium ou de calcium et des aldéhydes aromatiques, ainsi que de vitamines et autres substances macromoléculaires, responsables des qualités biologiques permet, après addition de 850 litres de $R_3$ d'obtenir 1000 litres d'une boisson naturelle tout-à-fait comparable au point de vue goût au vin rouge d'origine et dont la teneur en alcool est de l'ordre de 5° GL.

Cette boisson présente par rapport à la boisson d'origine une diminution de l'acidité volatile et de l'acidité totale, une faible modification du poids sec et un pH pratiquement constant comme en témoigne le Tableau 1 ci-après.

Tableau 1

| Caractéristiques physico-chimiques | Vin d'origine (Bordeaux, Côtes de Castillon) | Vin désalcoolisé |
|---|---|---|
| Degré alcoolique (Gay-Lussac) | 12°6 | $\simeq$ 5° C |
| Sucres réducteurs (Gr/1) | < 2 gr | < 2 gr |
| Acidité totale (Gr/1) | 3,75 | 2,95 |
| Acidité volatile (Gr/1) | 0,64 | 0,48 |
| $SO_2$ libre (mg) | 17 | 8 |
| $SO_2$ total (mg) | 118 | 55 |
| Extrait sec (Gr) | 26,7 | 22,8 |
| pH | 3,55 | 3,48 |

**0 069 137**

Exemple 2

1000 litres d'un vin blanc demi-sec (Côtes Montravel) titrant 13° GL sont traités selon le procédé de la présente invention, en suivant la marche décrite dans l'exemple 1.

On obtient finalement 1000 litres d'un vin blanc titrant 5°4 dont les qualités organoleptiques et biologiques sont tout-à-fait comparables à celles du vin d'origine.

Le Tableau 2 ci-après rassemble les caractéristiques physicochimiques du vin de départ et du vin désalcoolisé obtenu par mise en oeuvre du procédé selon l'invention.

Tableau 2

| Caractéristiques physico-chimiques | Vin d'origine (Côtes Montravel) | Vin désalcoolisé |
|---|---|---|
| Degré alcoolique (Gay-Lussac) | 13° | 5°4 |
| Sucres réducteurs (Gr/1) | <2 gr | <2 gr |
| Acidité totale (Gr/1) | 4 | 3,2 |
| Acidité volatile (Gr/1) | 0,61 | 0,47 |
| $SO_2$ libre (mg) | 17 | 10 |
| $SO_2$ total (mg) | 166 | 89 |
| Extrait sec (Gr) | 22,3 | 18,4 |
| pH | 3,45 | 3,42 |

Exemple 3

On reprend les conditions de l'exemple 1 et on rassemble les rétentats $R_1$ et $R_2$ provenant respectivement de l'étape d'ultrafiltration et de l'étape d'osmose inverse dudit exemple 1 avec le rétentat $R_3$ provenant de l'étape de distillation sous vide et on soumet l'ensemble à une étape de lyophilisation par évaporation et sublimation sous vide après congélation à $-20°C$. On obtient en quelques jours, par cette cryodessication, un résidu desséché et pulvérulent contenant sous forme concentrée tous les éléments constitutifs du vin, à l'exception de l'alcool et possèdant, après réhydratation adéquate, des qualités physico-chimiques, biologiques et organoleptiques tout-à-fait comparables à celles du vin de départ.

Comme il va de soi et comme il ressort de ce qui précède, la présente invention ne se limite pas aux seuls modes de réalisation décrits ci-dessus à titre d'exemple.

**Revendications**

1. Procédé de préparation de boissons naturelles à faible teneur alcoolique, caractérisé en ce qu'il consiste à soumettre un liquide alcoolisé naturel à trois étapes successives de fractionnement physique non dénaturant comprenant successivement deux étapes de filtrations moléculaires sur membranes semi-perméables, respectivement par ultra-filtration et par osmose inverse, associées à une distillation sous vide à basse température, puis à mélanger les différents rétentats obtenus après ultra-filtration, osmose inverse et distillation, en proportions adéquates correspondant aux teneurs du produit de départ en éléments supports des propriétés organoleptiques, biologiques et physico-chimiques, alcool excepté.

2. Procédé selon la revendication 1, caractérisé en ce que la première étape d'ultra-filtration moléculaire est effectuée sous faible pression au travers d'un ultrafiltre semi-perméable dont le seuil de coupure se situe entre 30 000 et 1000 et de préférence aux environs de 10 000 fournissant un rétentat $R_1$ (mélange de molécules organiques de PM ≥ 10 000) et un ultrafiltrat $F_1$ (mélange de molécules organiques de poids moléculaires inférieurs à 10 000).

3. Procédé selon les revendications 1 et 2, caractérisé en ce que la deuxième étape d'osmose inverse, appliquée à l'ultrafiltrat $F_1$ est effectuée sous forte pression au travers de membranes semi-perméables dont le seuil de coupure se situe entre 500 et 100 et de préférence aux environs de 250

5

fournissant ainsi un rétentat $R_2$ (mélange de molécules organiques de poids moléculaires compris entre 10 000 et 250) et un ultrafiltrat $F_2$ (mélange de molécules organiques de poids moléculaires inférieurs à 250).

4. Procédé selon l'une quelconque des revendications 1 à 3, caractérisé en ce que la troisième étape d'évaporation et de distillation sous vide à basse température, appliquée à l'ultrafiltrat $F_2$, fournit un rétentat $R_3$ (mélange de molécules de poids moléculaires inférieures à 250) et un évaporat $F_3$ constitué d'alcool.

5. Procédé selon l'une quelconque des revendications 1 à 4, caractérisé en ce qu'il comporte une étape supplémentaire de dessication sous vide par sublimation, après congélation, des mélanges variables de $R_1 + R_2 + R_3$, de $R_1 + R_3$, de $R_2 + R_3$.

6. Procédé selon l'une quelconque des revendications 1 à 5, caractérisé en ce que les liquides alcoolisés naturels de départ sont choisis parmi les vins, les bières, les poirés, les cidres, les apéritifs, les liqueurs et les liquides issus de la fermentation des glucides vegétaux.

7. Produits obtenus à partir des mélanges des fractions $F_1 + F_2$, $F_1 + F_3$, $F_2 + F_3$ et $F_1 + F_2 + F_3$ résultant de la mise en oeuvre du procédé selon les revendications 1 à 4.

8. Boissons naturelles à faible teneur alcoolique, liquides ou lyophilisées, obtenues à partir des mélanges de tout ou partie des fractions $R_1$, $R_2$ et $R_3$ selon les revendications 1 à 7.

## Patentansprüche

1. Verfahren zur Herstellung von alkoholarmen natürlichen Getränken, dadurch gekennzeichnet, daß man eine natürliche alkoholische Flüssigkeit in drei aufeinanderfolgenden Schritten einer nicht denaturierenden physikalischen Fraktionierung unterwirft, die aufeinanderfolgend zwei Schritte von Molekularfiltrationen durch semipermeable Membranen bzw. durch Ultrafiltration und durch Umkehrosmose umfaßt, eine Vakuumdestillation bei niedriger Temperatur anschließt, dann die nach Ultrafiltration, Umkehrosmose und Destillation erhaltenen Retentate in adäquaten Anteilen mischt, die den Gehalten des Ausgangsproduktes an die organoleptischen, biologischen und physiko-chemischen Eigenschaften bestimmenden Bestandteilen, ausgenommen Alkohol, entsprechen.

2. Verfahren nach Anspruch 1, dadurch gekennzeichnet, daß der erste Schritt der molekularen Ultrafiltration unter geringem Druck durch ein semipermeables Ultrafilter bewirkt wird, dessen Trennschwelle zwischen 30 000 und 1000, und vorzugsweise bei ungefähr 10 000 liegt, wodurch sich ein Retentat $R_1$ (Mischung organischer Moleküle vom Molekulargewicht $\geq 10\,000$) und ein Ultrafiltrat $F_1$ (Mischung orgnaischer Moleküle mit Molekulargewichten $< 10\,000$) ergibt.

3. Verfahren nach den Ansprüchen 1 und 2, dadurch gekennzeichnet, daß der zweite Schritt der Umkehrosmose des Ultrafiltrats $F_1$ unter hohem Druck durch semipermeable Membranen durchgeführt wird, die eine Trennschwelle zwischen 500 und 100, und vorzugsweise von ungefähr 250 besitzen, wobei sich ein Retentat $R_2$ (Mischung organischer Moleküle mit Molekulargewichten zwischen 10 000 und 250) und ein Ultrafiltrat $F_2$ (Mischung organischer Moleküle mit Molekulargewichten unterhalb von 250) ergibt.

4. Verfahren nach einem der Ansprüche 1 bis 3, dadurch gekennzeichnet, daß der dritte Schritt der Verdampfung und der Vakuumdestillation bei niedriger Temperatur, angewendet auf das Ultrafiltrat $F_2$, ein Retentat $R_3$ (Mischung von Molekülen mit Molekulargewichten unterhalb von 250) und ein Evaporat $F_3$, das aus Alkohol besteht, ergibt.

5. Verfahren nach einem der Ansprüche 1 bis 4, dadurch gekennzeichnet, daß man nach Einfrieren der variablen Mischungen von $R_1 + R_2 + R_3$, von $R_1 + R_3$, von $R_2 + R_3$ einen zusätzlichen Schritt einer Vakuumtrocknung durch Sublimation durchführt.

6. Verfahren nach einem der Ansprüche 1 bis 5, dadurch gekennzeichnet, daß die natürlichen alkoholischen Ausgangsflüssigkeiten ausgewählt sind aus Weinen, Bieren, Birnenmost, Apfelwein, Aperitifen, Likören und von durch Fermentation pflanzlicher Kohlehydrate enthaltenen Flüssigkeiten.

7. Produkte, erhalten aus den Mischungen der nach dem Verfahren gemäß den Ansprüchen 1 bis 4 erhaltenen Fraktionen $F_1 + F_2$, $F_1 + F_3$, $F_2 + F_3$ und $F_1 + F_2 + F_3$.

8. Alkoholarme natürliche Getränke in flüssiger oder lyophilisierter Form, erhalten durch ganze oder teilweise Mischung der Fraktionen $R_1$, $R_2$ und $R_3$ gemäß den Ansprüchen 1 bis 7.

## Claims

1. A process for the preparation of natural beverages having a low alcohol level, characterized in that it consists in subjecting a natural alcoholic liquid to three successive physical non-denaturing fractionating steps comprising in succession two molecular filtration steps on semi-permeable membranes, respectively ultrafiltration and reverse osmosis, associated with a vacuum distillation at low temperature, then in mixing different retentates obtained after ultrafiltration, reverse osmosis and distillation, in suitable proportions corresponding to the levels of the starting product in the elements supporting the organoleptic, biological and physicalchemical properties with the exception of the alcohol.

**0 069 137**

2. The process according to claim 1, characterized in that the first step of molecular ultrafiltration is effected under low pressure through a semi-permeable ultrafilter whose molecular weight separation threshold is between 30,000 and 1,000 and preferably is about 10,000 to form a retentate $R_1$ (mixture of organic molecules of a molecular weight greater than or equal to 10,000) and an ultrafiltrate $F_1$ (mixture of organic molecules of a molecular weight less than 10,000).

3. The process according to claims 1 and 2, characterized in that the second step of reverse osmosis is applied under high pressure to the ultrafiltrate $F_1$ through semi-permeable membranes whose molecular weight separation threshold is between 500 and 100 and is preferably aout 250 to form a retentate $R_2$ (mixture of organic molecules of a molecular weight between 10,000 and 250) and an ultrafiltrate $F_2$ (mixture of organic molecules of a molecular weight less than 250).

4. The process according to one of claims 1 through 3, characterized in that the third step of vacuum evaporation and distillation under a low temperature applied to the ultrafiltrate $F_2$ yields a retentate (mixture of molecules of molecular weight less than 250) and an evaporate $F_3$ constituted of alcohol.

5. The process according one of claims 1 through 4, characterized in that it comprises a supplemental vacuum drying step by sublimation after freezing of variable mixtures of $R_1 + R_2 + R_3$, of $R_1 + R_3$, of $R_2 + R_3$.

6. The process according to one of claims 1 through 5, characterized in that the starting natural alcoholic liquid is selected from wines, beers, perrys, ciders, aperitives, liqueurs and liquids resulting from vegetable glucide fermentation.

7. Products obtained starting from mixtures of the fractionations $F_1 + F_2$, $F_1 + F_3$, and $F_1 + F_2 + F_3$ resulting from carrying out the process according to claims 1 through 4.

8. Liquid or lyophilized beverages having a low alcohol content formed with the mixture of the whole or part of $R_1$, $R_2$ and $R_3$ according to claims 1 through 7.

7